(19) Europäisches Patentamt
European Patent Office
Office européen des brevets

(11) EP 1 881 498 A1

(12) EUROPEAN PATENT APPLICATION

(43) Date of publication:
**23.01.2008 Bulletin 2008/04**

(21) Application number: **07013917.5**

(22) Date of filing: **16.07.2007**

(51) Int Cl.:
*G11B 20/00* (2006.01) *G11B 20/10* (2006.01)
*G11B 27/031* (2006.01) *G11B 27/28* (2006.01)
*G10L 19/00* (2006.01) *G10L 19/14* (2006.01)
*H04N 5/00* (2006.01) *G10L 11/00* (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.07.2006 JP 2006200041**

(71) Applicant: **Sony Corporation**
**Minato-ku**
**Tokyo (JP)**

(72) Inventors:
- **Mukaiyama, Ryo**
  **Tokyo (JP)**
- **Ijichi, Susumu**
  **Tokyo (JP)**
- **Araki, Satoshi**
  **Tokyo (JP)**

(74) Representative: **Müller - Hoffmann & Partner**
**Patentanwälte,**
**Innere Wiener Strasse 17**
**81667 München (DE)**

# (54) Data recording apparatus, data recording method and data recording program

(57) The present invention provides a data recording apparatus, a data recording method, and a data recording program. This data recording apparatus includes: a section identification block configured to, in mixed data mixingly formed by a music part and another part different from the music part, identify a music part section equivalent to the music part and another part section equivalent to the another part; a data format conversion block configured to convert a data format of the mixed data; a recording block configured to record the mixed data with the data format of the mixed data converted by the data format conversion block; and a control block configured to, when the data format of the mixed data is converted, control the data format conversion block to convert data formats of the music part section and that another part section into different data formats from each other.

FIG.4

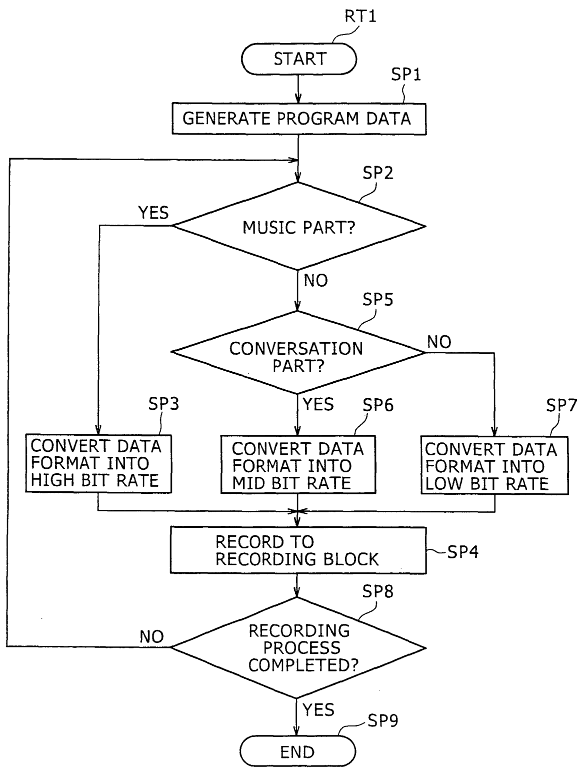


EP 1 881 498 A1

## Description

CROSS REFERENCES TO RELATED APPLICATIONS

The present invention contains subject matter related to Japanese Patent Application JP 2006-200041 filed in the Japan Patent Office on July 21, 2006, the entire contents of which being incorporated herein by reference.

BACKGROUND OF THE INVENTION

1. Field of the Invention

The present invention relates to a data recording apparatus, a data recording method, and a data recording program and, more particularly, to a data recording apparatus, a data recording method, and a data recording program configured to record program data of radio programs broadcast from radio broadcasting stations (hereafter referred to as radio stations).

2. Description of the Related Art

Related-art data recording apparatuses receive radio programs broadcast from radio stations as radio program data (hereafter referred to simply as program data). These program data are continuously superimposed with text information associated with that music as a part of that program data from the beginning of a music data section to the end thereof. Each of these data recording apparatuses has a desired keyword for comparison with the text information superimposed on the program data. Having received program data, the data recording apparatus compares the keyword with the text information superimposed on the program data to detect a section on which the text information matching the keyword is superimposed in the program data and, at the same time, extracts data (hereafter referred to as section data) in the section detected from the program data, thereby recording the extracted section data (refer to Japanese Patent Laid-open No. Hei 10-51337, for example).

However, with each of the above-mentioned related-art data recording apparatuses, only the section data detected in program data is recorded, so that, even if another desired part is included in the program data, that desired part may not be detected without a keyword. Therefore, for the data recording apparatus to record eventually necessary information with reliability, not only the section data detected in program data at reception thereof, but also remaining sections in which it is not sure whether desired information is included at that moment, namely, the received program data should be recorded in its entirety without change.

So, the related-art technology involves a problem that, if the entire program data is recorded without change at the reception thereof, the data recording apparatus may use many recording areas that will be eventually wasted because it is not certain whether desired information is included in the program data recorded in these recording areas.

SUMMARY OF THE INVENTION

The present invention addresses the above-identified and other problems associated with related-art methods and apparatuses. Therefore, it is desirable to provide a data recording apparatus, a data recording method, and a data recording program configured to minimize recording areas to be used for wasted recording.

According to an embodiment of the present invention, there is provided a data recording apparatus. The data recording apparatus includes a section identification block configured to, in mixed data mixingly formed by a music part and another part different from the music part, identify a music part section equivalent to the music part and another part section equivalent to the another part. The data recording apparatus further includes: a data format conversion block configured to convert a data format of the mixed data; and a recording block configured to record the mixed data with the data format of the mixed data converted by the data format conversion block. The data recording apparatus still further includes, a control block configured to, when the data format of the mixed data is converted, control the data format conversion block to convert data formats of the music part section and that another part section into different data formats from each other.

As described above and according to an embodiment of the present invention, in mixed data formed by a music part and another part different from this music part, a music part section equivalent to the music part and another part section equivalent to this another part are identified. The data formats of the identified music part section and another part section are converted into data formats different from each other before these sections are recorded. Consequently, while surely keeping the data that may contain user-desired information, that data that may be wasted later can be recorded to as small a recording area as possible by recording mixed data by converting the data format of the music part section and the data format of another part section in which it is uncertain whether user-desired information is included at the time of mixed data recording into a data format requiring less data amount than before the conversion.

As described above and according to an embodiment of the present invention, in mixed data formed by a music part and another part different from this music part, a music part section equivalent to the music part and another part section equivalent to this another part are identified. The data formats of the identified music part section and another part section are converted into data formats different from each other before these sections are recorded. Consequently, while surely keeping the data that may contain user-desired information, that data that may be wasted later can be recorded to as small a recording area as possible by recording mixed data by converting the data format of the music part section and the data format of another part section in which it is uncertain whether user-desired information is included at the time of mixed data recording into a data format requiring less data amount than before the conversion. Therefore, according to an embodiment of the present invention, there is provided a data recording apparatus, a data recording method, and a data recording program that are configured to minimize recording areas that may be used for waste recording.

## BRIEF DESCRIPTION OF THE DRAWINGS

Other aspects of the present invention will become apparent from the following description of embodiments with reference to the accompanying drawings in which:

FIG. 1 is a block diagram illustrating an overview of a data recording apparatus practiced as a first embodiment of the present invention;
FIG. 2 is a block diagram illustrating a detail configuration of the data recording apparatus shown in FIG. 1;
FIG. 3 is schematic diagram illustrating a bit rate behavior of program data;
FIG. 4 is a flowchart indicative of a radio program section recording process procedure;
FIG. 5 is a flowchart indicative of a radio program divided recording process procedure;
FIG. 6 is a flowchart indicative of a music likeness detection process procedure;
FIG. 7 is an another flowchart indicative of a music likeness detection process procedure; and
FIG. 8 is a block diagram illustrating a circuit configuration of a data recording apparatus practiced as a second embodiment of the present invention.

## DETAILED DESCRIPTION OF THE PREFERRED EMBODIMENTS

This invention will be described in further detail by way of embodiments thereof with reference to the accompanying drawings.

### (1) First embodiment

### (1-1) Overview of the first embodiment

Now, referring to FIG. 1, reference numeral 1 denotes a data recording apparatus practiced as the first embodiment of the present invention. Of mix data in which a music part and another part other than the music part coexist, a section identification block 2 of the data recording apparatus 1 identifies a music part section equivalent to the music part and another section equivalent to another part. A data format conversion block 3 of the data recording apparatus 1 converts the data format of mix data. A recording block 4 of the data recording apparatus 1 records the mix data of which data format is converted. When the data format of mix data is converted, a control block 5 of the data recording apparatus 1 controls the data format conversion block 3 such that the music part section and another section identified by the section identification block 2 in the mix data are converted into different data formats. This novel configuration allows, in recording mix data, the data recording apparatus 1 to convert, of the music part section and another section of that mix data, the data format of the section in which it is uncertain whether desired information is included or not at the point of time such that a data amount of the mix data is reduced from that before the conversion and record the resultant data format. This, in turn, allows the data recording apparatus 1 to record the data that may be wasted later into as small an recording area as possible, while surely keeping the data that may include desired information, thereby minimizing the recording area that may be used for wasted recording.

### (1-2) Detail configuration of a data recording apparatus according to the first embodiment

The following describes a detail hardware configuration of a data recording apparatus 10 with respect to functional block thereof, with reference to FIG. 2.

Upon tuning in on a radio station by the user through an operation block 12 and request for the output of a radio program, a radio receiver block 11 of the data recording apparatus 10 extracts a radio wave corresponding to the requested radio program of the radio station selected by the user from the radio waves of a plurality of radio stations and executes predetermined reception processing, such as demodulation processing, transmitting a resultant program signal of the radio program to a data processing block 14. The data processing block 14 executes digital processing, such as analog-to-digital conversion processing and equalizing processing, on the program signal supplied from the radio receiver block 11 to generate program data. At this point of time, the obtained program data includes both a music part corresponding to the music and a conversation part corresponding to a conversation in the ratio program, for example. Then, the data processing block 14 executes digital-to-analog conversion processing and analog processing, such as amplification processing, on the generated program data. Consequently, the data processing block 14 gets a resultant analog program signal and transmits this analog signal to an output block 15. The output block 15 sounds the radio program based on the supplied program signal to be heard by the user. Thus, the data recording apparatus 10 can let the user hear a radio program broadcast by a desired radio station.

Also, when the user tunes in on a ratio station through the operation block 12 to request the recording of a radio program, the radio receiver block 11 extracts a radio wave in substantially the same manner as described above and executes predetermined reception processing, such as demodulation processing, thereby transmitting a resultant program signal of the radio program to the data processing block 14. The data processing block 14 executes digital processing on the program signal supplied from the radio receiver block 11 and transmits the resultant program data to a recording block 16. The recording block 16 records the program data supplied from the data processing block 14, as a data file. Thus, the data recording apparatus 10 can record radio programs broadcast by a desired radio station.

Subsequently, when the reproduction of the program data is requested by the user through the operation block 12, the recording block 16 of the data recording apparatus 10 reads the requested program data and transmits this program data to the data processing block 14. The data processing block 14 executes predetermined digital processing on the program data supplied by the recording block 16 and then executes digital-to-analog conversion processing and analog processing, such as amplification processing, on the program data, transmitting the resultant analog program signal to the output block 15. The output block 15 sounds the radio program based on the supplied program signal to be heard by the user. In this way, the data recording apparatus 10 can let the user hear the recorded radio program.

Further, in accordance with results of the execution of various computer programs read from a memory, not shown, or the recording block 16, such as outputting and recording of radio programs, a display block 17 of the data recording apparatus 10 displays various screens associated with these operations for the user to visually check the results of operations.

In addition to the above-mentioned configuration, the data recording apparatus 10 has a section identification block 18. The sectional identification block 18 identifies, at the time or recording each radio program, a music part section equivalent to the music part and another part section equivalent to another part different from the music part, both existing together in the program data generated by the data processing block 14. At the same time, the sectional identification block 18 identifies, in another part section identified in the program data, a conversation part section equivalent to a conversation part and a remaining part section equivalent to parts (namely, remaining parts), such as commercial (CM), news, and traffic information.

The data recording apparatus 10 also has a data format conversion block 19. The data format conversion block 19 converts the data format of the program data generated by the data processing block 14 at the time of radio program recording. The data format herein specifies a data amount of program data. Converting this data format can change bit rates, sampling rates, data compression ratio, and acoustic schemes, for example.

Further, the data recording apparatus 10 has a control block 20. The control block 20 controls the data format conversion block 19 at the time of radio program recording such that the data formats of sections identified by the sectional identification block 18 in the program data are converted into different data formats.

Consequently, the data recording apparatus 10 converts, at the time of radio program recording, the data formats of the sections identified by the sectional identification block 18 in the program data into different data formats through the data format conversion block 19 and records the converted sections to the recording block 16, thereby recording each radio program with different bit rates, sampling rates, data compression ratios, and acoustic schemes for sections.

(1-3) Recording of a radio program for each section

The following details radio program section recording process for identifying a music part section, a conversation part section, and remaining part section in program data, converting these identified sections into different data formats, and recording the converted sections to the recording block 16, thereby recording each radio program with different bit rates for the different converted section.

When a radio station is selected by the user through the operation block 12 to request the recording of a radio program with different bit rates for different section, the radio receiver block 11 starts radio program section recording process, in which the radio wave of the selected radio station is extracted, predetermined reception processing, such as demodulation processing processing, is executed on the extracted radio wave, and a resultant program signal is transmitted to the data processing block 14. The data processing block 14 executes digital processing on the program signal supplied by the radio receiver block 11 and transmits the resultant data to the sectional identification block 18 in a predetermined processing unit (equivalent to program data for several seconds of radio program, for example, hereafter referred to as processing unit data).

The sectional identification block 18 detects how the processing unit data supplied from the data processing block 14 is like music (namely, whether that processing unit data is a music track or not), which is numerically represented. The sectional identification block 18 executes this music-likeness detection processing on the entire program data. Details of this processing will be described later. Also, the sectional identification block 18 compares a music likeness value obtained as a result of the music likeness detection processing with a predetermined first threshold to determine whether the music likeness value is higher than the first threshold.

If the music likeness value is found higher than the first threshold, then the sectional identification block 18 determines that this processing unit data is a part or all of the data corresponding to the music part section in the program data. Then, the sectional identification block 18 transmits the processing unit data (hereafter referred to as music section unit data) found to be a part or all of the data corresponding to the music part section to the data format conversion block 19, thereby notifying the control block 20 of the transmission of the music section unit data to the data format conversion block 19. Thus, the data recording apparatus 10 identifies the music part section in program data.

On the other hand, if the music likeness value is found to be lower than the first threshold, the sectional identification block 18 determines that this processing unit data is a part or all of data corresponding to another part section in the program data. Next, the sectional identification block 18 compares the processing unit data (hereafter referred to as another part unit data) determined to be a part or all of the data corresponding to another part section with a predetermined section threshold to determine whether this music likeness value is higher than the second threshold.

If the music likeness value is found to be higher than the second threshold, then the sectional identification block 18 determines that this another part section data is a part or all of the data corresponding to the conversation part section in the program data. Then, the sectional identification block 18 transmits the another part unit data (hereafter referred to as conversation part unit data) identified as a part or all of the data corresponding to the conversation part section to the data format conversion block 19 and notifies the control block 20 of the transmission of this conversation part unit data to the data format conversion block 19.

On the other hand, if the music likeness value is found to be lower than the second threshold, then the sectional identification block 18 determines that the another part unit data is a part or all of the data corresponding to the remaining part section in the program data. Then, the sectional identification block 18 transmits the another part unit data (hereafter referred to as remaining part unit data) identified as a part or all of the data corresponding to the remaining part section to the data format conversion block 19 and notifies the control block 20 of the transmission of this remaining part unit data to the data format conversion block 19. In this way, the data recording apparatus 10 identifies each of conversation part sections and remaining part sections in program data.

Then, every time processing unit data is supplied from the data processing block 14, the sectional identification block 18 detects the music likeness from the supplied processing unit data and compares the music likeness values of the supplied data with the first and second thresholds. At the same time, the sectional identification block 18 determines on the basis of the comparison whether the processing unit data is music part unit data, conversation part unit data, or remaining part unit data. The sectional identification block 18 transmits the determined unit data to the data format conversion block 19 and notifies the control block 20 of the unit data transmitted to the data format conversion block 19. Thus, the data recording apparatus 10 identifies each of sections in program data.

If the music part, for example, in program data has been requested through the operation block 12 at the time of radio program recording, then the control block 20 determines in accordance with the notification from the sectional identification block 18 that the music part section in program data identified by the sectional identification block 18 is a section in which user-desired information is included and controls the data format conversion block 19 so as to convert the data format of this section into a data format of high bit rate with which the music data is reproducible in high tone quality. Also, in accordance with the notification from the sectional identification block 18, the control block 20 determines that the conversation part section program data identified by the sectional identification block 18 to be a section to be recorded in high tone quality although it is uncertain whether this section includes the user-desired information at that point of time, thereby controlling the data format conversion block 19 so as to convert the data format of the conversation part section into a format of mid bit rate that is small in data amount while lower than the high bit rate in tone quality at the time of reproduction. Further, in accordance with the notification from the sectional identification block 18, the control block 20 determines that the remaining part section in program data identified by the sectional identification block 18 to be a section that may only be recorded although it is uncertain whether this section includes the user-desired information at that point of time, thereby controlling the data format conversion block 19 so as to convert the data format of the remaining part section into a format of low bit rate that minimizes the data amount.

Consequently, when the music part unit data is supplied from the sectional identification block 18, the data format conversion block 19 converts the data format of the supplied data into a data format of high bit rate under the control of the control block 20. When the conversation part unit data is supplied from the sectional identification block 18, the data format conversion block 19 converts the data format of the supplied data into a format of mid bit rate under the control of the control block 20. When the remaining part unit data is supplied from the sectional identification block 18, the data format conversion block 19 converts the data format of the supplied data into a data format of low bit rate under the control of the control block 20.

Then, the data format conversion block 19 transmits the data-format-converted music part unit data, conversation part unit data, and remaining part unit data (namely, processing unit data) to the recording block 16. The recording block 16 records the processing unit data sequentially supplied from the data format conversion block 19, as one data file, and ends the radio program section recording process when the end of radio program recording is requested through the operation block 12.

As described above, as shown in FIG. 3, at the time of radio program section recording process, the data recording apparatus 10 converts the data format of music part section MS desired by the user in program data BD into a format of high bit rate HB in which reproduction of high tone quality is provided and records the newly formatted music part section to the recording block 16. At the same time, the data recording apparatus 10 converts the data formats of conversation part section TS and remaining part section RS in which it is uncertain whether these sections include the user-desired information into data formats of mid bit rate MB and low bit rate LB, respectively, that reduces the data amount as compared with high bit rate HB and records the newly formatted conversation part section and remaining part section to the recording block 16. Consequently, while surely keeping conversation part section TS and remaining part section RS that may include the user-desired information, the data recording apparatus 10 can record conversation part section TS and remaining part section RS that may be wasted later to as small recording areas as possible.

(1-4) Radio program section recording process procedure

The following describes a procedure of radio program section recording process described above. When the recording of a radio program is requested with different bits for different section, the data recording apparatus 10 starts radio program section recording process procedure RT1 as shown in FIG. 4. When radio program section recording process procedure RT1 is started, the radio receiver block 11 of the data recording apparatus 10 extracts a radio wave of a radio station selected by the user, executes predetermined reception processing, such as demodulation processing on the extracted radio wave, and transmits a resultant program signal to the data processing block 14. Then, the data processing block 14 executes digital processing on the supplied radio signal and transmits resultant program data to the sectional identification block 18 on a processing unit data basis, upon which the procedure goes to step SP2.

In step SP2, the sectional identification block 18 detects music likeness of each processing unit data of the program data and determines whether the detected music likeness value is higher than the first threshold value. If the determination is in the affirmative in step SP2, it indicates that the processing unit data in which music likeness was detected is a part of the data corresponding to the music part section in the program data. Therefore, the sectional identification block 18 transmits this processing unit data to the data format conversion block 19 as the music part unit data and notifies the control block 20 of the transmission of this music part unit data to the data format conversion block 19, upon which the procedure goes to step SP3.

In step SP3, the data format conversion block 19 converts the data format of the supplied music part unit data into a data format of high bit rate and transmits the newly formatted data to the recording block 16 under the control of the control block 20, upon which the procedure goes to step SP4.

On the other hand, if the determination is in the negative in step SP2, it indicates that the processing unit data in which music likeness was detected is a part of the data corresponding to another part section in the program data. Therefore, the sectional identification block 18 identifies this processing unit data to be another part unit data, upon which the procedure goes to step SP5.

In step SP5, the sectional identification block 18 determines whether the music likeness value of another part unit data is higher than the second threshold. If the determination is in the affirmative in step SP5, it indicates that this another part unit data is a part of the data corresponding to the conversation part section in the program data. Therefore, the sectional identification block 18 transmits this another part unit data to the data format conversion block 19 as conversation part unit data and notifies the control block 20 of the transmission of the conversation part unit data to the data format conversion block 19, upon which the procedure goes to step SP6.

In step SP6, the data format conversion block 19 converts the data format of the conversation part unit data into a format of mid bit rate and transmits the newly formatted data to the recording block 16, upon which the procedure goes to step SP4.

On the other hand, if the determination is in the negative in step SP5, it indicates that this another part unit data is a part of the data corresponding to the remaining section in the program data. Therefore, the sectional identification block 18 identifies this another part unit data to be remaining part unit data, transmits this remaining part unit data to the data format conversion block 19, and notifies the control block 20 of the transmission of the remaining part unit data to the data format conversion block 19, upon which the procedure goes to step SP7.

In step SP7, the data format conversion block 19 converts the data format of the remaining part unit data into a data format of low bit rate and transmits the newly formatted data to the recording block 16 under the control of the control block 20, upon which the procedure goes to step SP4.

In step SP4, the recording block 16 sequentially records the data-format-converted music part unit data, conversation part unit data, and remaining part unit data supplied from the data format conversion block 19 as one data file, upon which the procedure goes to step SP8.

In step SP8, the control block 20 determines whether to end radio program section recording process procedure RT1 or not. If the determination is in the negative in step SP8, indicates that there is no request for the end of radio program recording through the operation block 12 and therefore there still remains the processing unit data to be processed. Consequently, the procedure returns to step SP2 to repeat the above-mentioned sequence of processing therefrom. This procedure is repeatedly executed until the affirmative determination is obtained in step SP8.

On the other hand, if the determination is in the affirmative in step SP8, it indicates that the end of radio program recording has been requested through the operation block 12. Therefore, the procedure goes to step SP9 to end radio program section recording process procedure RT1.

By this radio program section recording process procedure RT1, the data recording apparatus 10 records each radio program with different bit rates for different sections.

(1-5) Divided recording of radio program

In addition to the recording of each radio program as one data file as described above, the data recording apparatus 10 can dividedly record each radio program. To be more specific, in addition to the above-mentioned configuration, the data recording apparatus 10 has a division block 21 (FIG. 2). When the data format conversion block 19 converts the data formats of different processing unit data in program data into data formats of different bit rates at the time of the above-mentioned radio program section recording process, the division block 21 divides, of the above-mentioned data-format-converted processing unit data of program data, a discrete processing unit data enclosed between different data formats or a plurality of continuous processing unit data having the same data format (namely, the music part section, the conversation part section, or the remaining part section of program data) from the program data as music part section data, conversation part section data, or remaining part section data.

Consequently, at the time of radio program recording, the data recording apparatus 10 can separate the music part section, the conversation part section, or the remaining part section of program data that was data-format-converted by the data format conversion block 19 from the program data as music part section data, conversation part section data, or remaining part section data through the division block 21. Namely, the data recording apparatus 10 can divide each radio program into sections and record these sections separately. The following details radio program divided recording process in which each radio program is divided by section before being recorded.

When a radio station is selected and the divided recording of a radio program is requested through the operation block 12, the radio receiver block 11 starts radio program divided recording process. Then, in substantially the same manner as the above-described radio program section recording process, the radio receiver block 11 extracts a radio wave of the radio station selected by the user, executes predetermined reception processing, such as demodulation processing, on the extracted radio wave, and transmits a resultant program signal to the data processing block 14.

The data processing block 14 executes digital processing on the supplied program signal and transmits resultant program data to the sectional identification block 18 for each processing unit data. Every time the processing unit data is supplied from the data processing block 14, the sectional identification block 18 detects the likeness of the supplied processing unit data and compares the likeness value with the first and second thresholds, thereby accordingly identifying the processing unit data to be music part unit data, conversation part unit data, and remaining part unit data. Then, the sectional identification block 18 transmits the identified music part unit data, conversation part unit data, and remaining part unit data to the data format conversion block 19 and notifies the control block 20 which of these data has been transmitted to the data format conversion block 19.

In substantially the same manner as the above-described radio program section recording, the data format conversion block 19 converts the data format of the above-mentioned music part unit data into a data format of high bit rate under the control of the control block 20. Also, the data format conversion block 19 converts the data format of the above-mentioned conversation part unit data into a format of mid bit rate under the control of the control block 20. Further, the data format conversion block 19 converts the data format of the above-mentioned remaining part unit data into a format of low bit rate under the control of the control block 20. Then, the data format conversion block 19 sequentially transmits the data-format-converted music part unit data, conversation part unit data, and remaining part unit data (namely, the processing unit data) to the division block 21.

Of the sequence of processing unit data supplied by the data format conversion block 19, the division block 21 determines that discrete and continuous music part unit data to be a bundle of data forming the music part section of the program data (hereafter referred to as music part section data) and divides this bundle of data from the program data, transmitting the divided data to the recording block 16. Further, of the sequence of processing unit data supplied from the data format conversion block 19, the division block 21 determines that discrete and continuous conversation part unit data to be a bundle of data forming the conversation part section in the program data (hereafter referred to as conversation part section data) and divides this bundle of data from the program data, transmitting the divided data to the recording block 16. In addition, of the sequence of processing unit data supplied from the data format conversion block 19, the division block 21 determines that discrete and continuous remaining part unit data to be a bundle of data forming the remaining part section in the program data (hereafter referred to as remaining part section data) and divides this bundle of data from the program data, transmitting the divided data to the recording block 16.

The recording block 16 dividedly records the program data such that the music part section data, the conversation part section data, and the remaining part section data are sequentially recorded as separate data files. When the end of the radio program divided recording process is requested through the operation block 12, the recording block 16 ends this process.

As described above, at the time of radio program divided recording process, the data recording apparatus 10 records the program data as divided into music part section data, conversation part section data, and remaining part section data. Therefore, at the time of reproducing program data, the data recording apparatus 10 can let the user confirm the contents of each radio program by directly accessing dividedly recorded music part section data, conversation part section data, and remaining part section data without sequentially reproducing the program data from the beginning thereof.

(1-6) Radio program divided recording process procedure

The following describes a procedure of the above-mentioned radio program divided recording process. When the divided recording of a radio program by section is requested by the user, the data recording apparatus 10 starts a radio program divided recording process procedure RT2 shown in FIG. 5. When the radio program divided recording process procedure RT2 is started, the radio receiver block 11 of the data recording apparatus 10 extracts a radio wave of a radio station selected by the user, executes predetermined reception processing, such as demodulation processing, on the extracted radio wave, and transmits a resultant program signal to the data processing block 14 in step SP11. Then, the data processing block 14 executes digital processing on the program signal and transmits resultant program data to the sectional identification block 18 for each processing unit data, upon which the procedure goes to step SP12.

In step SP12, the sectional identification block 18 detects the music likeness of each processing unit data of the program data and determines whether the obtained likeness value of each processing unit data is higher than the first threshold. If the determination is in the affirmative in step SP12, it indicates that the processing unit data in which the music likeness was detected is a part of the data corresponding to the music part section in the music data. Therefore, the sectional identification block 18 identifies this processing unit data to be the music part unit data, transmits the processing unit data to the data format conversion block 19, and notifies the control block 20 of the transmission of the music part unit data to the data format conversion block 19, upon which the procedure goes to step SP13.

In step SP13, the data format conversion block 19 converts the data format of the supplied music part unit data into a data format of high bit rate and transmits the newly formatted data to the division block 21 under the control of the control block 20, upon which the procedure goes to step SP14.

On the other hand, if the determination is in the negative in step SP12, it indicates that the processing unit data in which the music likeness was detected is a part of the data corresponding to another part section in the program data. Therefore, the sectional identification block 18 identifies this processing unit data to be another part unit data, upon which the procedure goes to step SP15.

In step SP15, the sectional identification block 18 determines whether the music likeness value of this another part unit data is higher than the second threshold. If the determination is in the affirmative in step SP15, it indicates that this another part unit data is a part of the data corresponding to the conversation part section in the program data. Therefore, the sectional identification block 18 identifies this another part unit data to be the conversation part unit data, transmits this conversation part unit data to the data format conversion block 19, and notifies the control block 20 of the transmission of this conversation part unit data to the data format conversion block 19, upon which the procedure goes to step SP16.

In step SP16, the data format conversion block 19 converts the data format of the supplied conversation part unit data into a data format of mid bit rate and transmits the newly converted data to the division block 21 under the control of the control block 20, upon which the procedure goes to step SP14.

On the other hand, if the determination is in the negative in step SP15, it indicates that this another part unit data is a part of the data corresponding to the remaining part section in the program data. Therefore, the sectional identification block 18 identifies this another part unit data to be the remaining part unit data, transmits the remaining part unit data to the data format conversion block 19, and notifies the control block 20 of the transmission of the remaining part unit data to the data format conversion block 19, upon which the procedure goes to step SP17.

In step SP17, the data format conversion block 19 converts the data format of the remaining part unit data into a data format of low bit rate and transmits the newly converted data to the division block 21 under the control of the control block 20, upon which the procedure goes to step SP14.

In step SP14, the division block 21 divides the program data into the music part section data, the conversation part section data, and the remaining part section data and transmits these divided data to the recording block 16, upon which the procedure goes to step SP18.

In step SP18, the recording block 16 records the program data as the music part section data, the conversation part section data, and the remaining part section data as different data files, upon which the procedure goes to step SP19.

In step SP19, the control block 20 determines whether to end radio program divided recording process procedure RT2. If the determination is in the negative in step SP19, it indicates that a request for ending the recording of the program data has not been made through the operation block 12 and therefore there still remains the processing unit data of the program data to be processed. Therefore, the procedure returns to step SP12 to repeat the above-mentioned sequence of processing therefrom. The control block 20 repeatedly executes above-mentioned sequence of processing until the affirmative determination is obtained in step SP19.

On the other hand, if the determination is in the affirmative in step SP19, it indicates that a request for ending the recording of the radio program has been made through the operation block 12. Therefore, the procedure goes to step SP20 to end radio program divided recording process procedure RT2.

By this radio program divided recording process procedure RT2, the data recording apparatus 10 dividedly records each radio program.

(1-7) Detection of music likeness

The following details the detection of music likeness used at the times of radio program section recording process and radio program divided recording process.

There are two types of music likeness detection methods to be executed by the sectional identification block 18, for example. One of the music likeness detection methods uses the distribution of the human voice frequency component to the relatively low side and the distribution of the frequency component of musical instruments, for example, to the relatively high side. Namely, this detection method executes frequency analysis on processing unit data and detects the music likeness on the basis of analysis results. The other music likeness detection method uses a phenomenon in which, because voice data is generally encoded (namely, data compressed) by modeling a human voice generating mechanism, a difference between the original waveform of the data other than voice in music, for example, and the waveform of the data obtained by codec processing (encode processing and then decode processing) the data other than voice becomes greater than an encode error obtained from the data of voice. Namely, this music likeness detection method detects music likeness on the basis of the encode error of processing unit data. The sectional identification block 18 uses one of these two music likeness detection methods. The following details these music likeness detection methods.

If the former music likeness detection method is used in the sectional identification block 18, the sectional identification block 18 starts music likeness detection process procedure RT3 shown in FIG. 6 in accordance with a music likeness detection program stored in a memory, not shown. Starting music likeness detection process procedure RT3, the sectional identification block 18 captures the processing unit data in the program data supplied from the data processing block 14 (for example, in the program data added with a time during the broadcasting of a radio program as a time code, this processing unit data is made up of the data for 1024 samples toward the passing side of that time t with reference to a certain time t as that time code) in step SP21. Then, the sectional identification block 18 executes FFT (Fast Fourier Transform) on this processing unit data to resolve this processing unit data into frequency spectrum, upon which the procedure goes to step SP22.

In step SP22, the sectional identification block 18 divides frequency spectrum sp into low frequency spectrum spn and high frequency spectrum spn around a frequency of 8 KHz, for example. It should be noted that if the sampling frequency of program data is 44.1 KHz, for example, low frequency spectrum spn becomes sp0 to sp185 and high frequency spectrum sp becomes sp186 to sp511. Also, the sectional identification block 18 computes low frequency power spectrum a by equation (1) below by squaring a magnitude component of low frequency spectra sp0 to sp185.

[Equation 1]

$$a = \sum_{n=0}^{126} (sp_n)^2 \qquad \cdots\cdots (1)$$

The sectional identification block 18 computes high frequency power spectrum b by equation (2) below by squaring a magnitude component of high frequency spectra sp186 to sp511:

[Equation 2]

$$b = \sum_{n=186}^{511} (sp_n)^2 \qquad \cdots\cdots (2)$$

Then, the sectional identification block 18 computes a ratio Rt between low frequency power spectrum a and high frequency power spectrum b (hereafter referred to as a power spectrum ratio) by equation (3) below:

[Equation 4]

$$x = \sum_{m=t-n+1}^{t} R_m \div n \qquad \cdots\cdots (4)$$

Then, the procedure goes to step SP23.

In step SP23, by equation (4) below, the sectional identification block 18 obtains value x of the moving average of a total of n power spectrum ratios Rt - n obtained until this point of time by use of a moving average computation method:

The sectional identification block 18 uses the obtained value x of the moving average as a value representative of music likeness (hereafter referred to as a music likeness value), upon which the procedure goes to step SP24.

In step SP24, the sectional identification block 18 determines whether the music likeness has been detected for the processing unit data of the entire program data. If the determination is in the negative because the processing unit data is still being captured from the data processing block 14 and the detection of music likeness has not been completed, the procedure returns to step SP21. Consequently, the sectional identification block 18 cyclically repeats the processing of steps SP21 through SP24 until the determination is in the affirmative in step SP24. Then, when the determination in the step SP24 becomes affirmative upon completion of the detection of the music likeness for the processing unit data of the entire program data, then the procedure goes to step SP25 to end music likeness detection process procedure RT3. Thus, if the former music likeness detection method is applied, the sectional identification block 18 uses a phenomenon that the music likeness is relatively small at a position where human voice is dominant as a program of the radio program in the program data and the music likeness is relatively large at a position where the tone of instruments is dominant, as seen from equation (3) above, thereby sequentially detecting the music likeness for every processing unit data of the program data.

If the latter music likeness detection method is applied to the sectional identification block 18, the sectional identification block 18 starts music likeness detection process procedure RT4 shown in FIG. 7 in accordance with a music likeness detection program stored in a memory, not shown. Starting music likeness detection process procedure RT4, the sectional identification block 18 captures the processing unit data (for example, this processing unit data is made up of the data for 200 samples toward the passing side of that time t with reference to a certain time t as that time code attached to the program data) in the program data supplied from the data processing block 14 in step SP31. Then, the sectional identification block 18 converts the sampling frequency of this processing unit data, upon which the procedure goes to step SP32. It should be noted that the sectional identification block 18 converts the sampling frequency of the processing unit data such that the converted sampling frequency matches a frequency that can be handled by the codec processing (codec processing equivalent to CELP (Code Excited Linear Prediction) for example) to be executed later, 8 KHz or 16 KHz for example.

In step SP32, the sectional identification block 18 executes codec processing (namely, encode processing and then decode processing) on the processing unit data. Then, the sectional identification block 18 computes an encode error Et from the original waveform c of the processing unit data and waveform d of the processing result data made up of the same 200 samples as the original for example obtained by executing codec processing on this processing unit data by equation (5) below by obtaining a difference between the samples:

[Equation 5]

$$E_t = \sum_{n=0}^{199} \left| c_{t+n} - d_{t+delay-n} \right| \quad \cdots\cdots (5)$$

Then the procedure goes to step SP33. It should be noted that, when executing the computation indicated by equation (5) above, the sectional identification block 18 computes encode error Et by considering a delay from the beginning of the codec processing on the processing unit data to the obtaining of the processing result data after the codec processing.

In step SP33, the sectional identification block 18 uses the moving average computation method to obtain value x of moving average of a total of n encode errors Et obtained until this point of time by equation (6) below:

[Equation 6]

$$x = \sum_{m=t-n+1}^{t} E_m \div n \quad \cdots\cdots (6)$$

The sectional identification block 18 uses the obtained moving average value x as a music likeness value, upon which the procedure goes to step SP34.

In step SP34, the sectional identification block 18 determines whether the music likeness has been detected for the processing unit data of the entire program data. If the determination is in the negative because the processing unit data is still being captured from the data processing block 14 and the detection of music likeness has not been completed, the procedure returns to step SP11. Consequently, the sectional identification block 18 cyclically repeats the processing of steps SP31 through SP34 until the determination is in the affirmative in step SP34. Then, when the determination in the step SP34 becomes affirmative upon completion of the detection of the music likeness for the processing unit data of the entire program data, then the procedure goes to step SP35 to end music likeness detection process procedure RT4. Thus, if the latter music likeness detection method is applied, the sectional identification block 18 uses a phenomenon that the music likeness is relatively small at a position where human voice is dominant as a program of the radio program in the program data and the music likeness is relatively large at a position where the tone of instruments is dominant, as seen from equation (5) above, thereby sequentially detecting the music likeness for every processing unit data of the program data.

(1-8) Operations and effects

Configured as described above, when the recording of a radio program is request in different bit rates for different sections, the data recording apparatus 10 generates program data from the extracted radio wave. Further, the data recording apparatus 10 detects music likeness for every processing unit data of the program data and compares the resultant music likeness with the first and second thresholds, thereby identifying the processing unit data as music part unit data, conversation part unit data, or remaining part unit data. Then, the data recording apparatus 10 converts the data format of the music part section desired by the user in the program data into a data format of high bit rate with which the music part section can be reproduced in high tone quality and records the newly converted data. At the same time, the data recording apparatus 10 converts the data formats of the conversation part section and the remaining part section with which it is uncertain whether user-desired information is included at the time of the beginning of the radio program recording into data formats of mid bit rate and low bit rate, respectively, that are lower in data amount than the high bit rate and stores the newly converted data.

Consequently, while surely keeping conversation part section and remaining part section that may include the user-desired information, the data recording apparatus 10 can record conversation part section and remaining part section that may be wasted later to as small recording areas as possible.

In addition, when the music part section, the conversation part section, and the remaining part section are identified in the program data to be respectively converted into data formats of different bit rates, the data recording apparatus 10 divides the program data into the music part section data of the music part section, the conversation part section data of the conversation part section, and the remaining part section data of the remaining part section and separately records these divided music part section data, conversation part section data, and remaining part section data. Consequently, at the time of reproducing recorded program data, the data recording apparatus 10 can let the user confirm the contents of each radio program by directly accessing dividedly recorded music part section data, conversation part section data, and remaining part section data without sequentially reproducing the program data from the beginning thereof, thereby enhancing the ease of use of the data recording apparatus 10.

Further, having identified the music part section equivalent to the music part and the another part section equivalent to another part in program data, the data recording apparatus 10 identifies the conversation part section equivalent to the conversation part and the remaining part section equivalent to the remaining part in this another part section and converts the data formats of the conversation part section and the remaining part section into data formats having different bit rates, recording these sections thus formatted. Consequently, when recording program data, the data recording apparatus 10 converts the data format of the conversation part section which should be recorded with good tone quality while it is uncertain whether or not user-desired information is included in this section into a format having mid bit rate with which the tone quality is lower than high bit rate at reproduction but the data amount becomes smaller. At the same time, the data recording apparatus 10 converts the data format of the remaining part section which may be recorded regardless of the tone quality at reproduction although it is uncertain whether or not user-desired information is included in this section into a data format having low bit rate with which the data amount becomes as small as possible. As a result, of the data that may contain user-desired information, the data supposed to provide a good quality tone at reproduction can be kept with a relatively good quality, while those data which require no quality tone at reproduction can be minimized in data amount in storage. This novel configuration provides the recording of data that takes into account reproduction requirements.

According to the above described embodiments, in the program data mixingly including a music part and a conversation part and a remaining part that are different from the music part, a music part section equivalent to the music part, a conversation part section equivalent to the conversation part, and a remaining part section equivalent to the remaining part are identified, the data formats of the identified sections are converted into data formats having different bit rates, and the sections thus formatted are recorded. This allows, at the time of recording program data, of the music part section, the conversation part section, and the remaining part section in this program data, the data recording apparatus 10 to convert the data formats of the conversation part section and the remaining part section which it is uncertain whether or not user-desired information is included into data formats that reduce data amounts to be recorded. This can record the data that may be wasted later to as small recording areas as possible, while surely keeping the data that may contain user-desired information, thereby minimizing the recording areas that may be used for waste recording.

(1-9) Variations to the first embodiment

In the above-described first embodiment of the present invention, the data formats of the sections forming program data are converted into data formats having different bit rates. However, the present invention is not limited to this, and it may also practicable make data format conversion such that sampling rates, data compression ratios, or acoustic schemes become different. It is also practicable not to especially execute data format conversion on those sections which are known beforehand containing no user-desired information. In addition, data format conversion may be made in combinations of bit rate, sampling rate, data compression ratio, and acoustic scheme. In this case, the data recording apparatus 10 converts the data format of the music part section of program data into a data format of high bit rate and stereo and the data format of the conversation part section into a data format of low bit rate and stereo, and the data format of the remaining part section into a data format of low bit rate and monaural, for example, thereby achieving substantially the same effects as above.

In the above-described first embodiment, the conversation part section and the remaining part section are identified from another part section in accordance with a result of the comparison between the music likeness value and the second threshold. However, the present invention is not limited to this, and it may also practicable to use the fact that, when a radio program is on air, the durations of CM and traffic information are shorter than the durations of music and conversation, thereby identifying a section having a duration over a predetermined duration in another part section as a conversation part section and a section having a duration below the predetermined duration as a remaining part section (namely, a section in which CM and traffic information are included). In this case, the data recording apparatus 10 can identify a part of a music track inserted in a radio program for only a short period of time and a short conversation part between music tracks as a section low in probability of containing user-desired information (namely, the remaining part section), thereby further reducing the recording area that may be used for waste recording.

In the above-described first embodiment, three sections, namely, the music part section, the conversation part section, and the remaining part section, are identified in music data. However, the present invention is not limited to this, and it may also practicable to identify any number of sections as far as it is two or more. If there is only one section to be identified in program data, substantially the same effects as above can be achieved by converting the data format of the identified section into a data format of high bit rate and the data format of the other section into a data format of low bit rate.

In the above-described first embodiment, the data format of the music part section in program data is converted into a data format of high bit rate and the data formats of the conversation part section and the remaining part section both forming another part section are converted into data formats of mid bit rate and low bit rate, respectively, lower than the data format of the music part section. However, the present invention is not limited to this, and it may also practicable to convert the data formats of the conversation part section and the remaining part section into data formats of high bit rate and the music part section into a data format of low bit rate, for example, in accordance with the setting made before the processing. Thus, it is also practicable to convert the data formats of the sections in music data in any manners required by the user.

(2) Second embodiment

(2-1) Overview of the second embodiment

The following describes a hardware circuit configuration implemented by hardware circuit blocks of a data recording apparatus 100 practiced as a second embodiment of the present invention, with reference to FIG. 8. In the data recording apparatus 100, a CPU (Central Processing Unit) 50 is connected to hardware functional blocks via a bus 51. The CPU 50 controls the entire data recording apparatus 100 by executing various computer programs read from a ROM (Read Only Memory) 52 or a HDD (Hard Disk Drive) 53 into a RAM (Random Access Memory) 54, thereby executing various processing operations.

When a radio station is selected and the outputting of a radio program is requested by the user through an operation key 55 arranged on the housing of the data recording apparatus 100, for example, the CPU 50 controls a tuner 59 so as to extract the radio wave of the radio station selected by the user of the radio waves of a plurality of radio stations. In addition, the CPU 50 controls a data processing block 57 so as to output radio programs. In response, the tuner 59 extracts the radio wave of the radio station selected by the user from among the radio waves of radio stations received from an antenna 60, executes predetermined reception processing, such as demodulation processing, and transmits a resultant program signal of the radio program to the data processing block 57. The data processing block 57 executes digital processing, such as analog-to-digital conversion processing and equalizing processing, on the program signal supplied by the tuner 59 and then analog processing, such as digital-to-analog conversion processing and amplification processing, on the resultant program data. Consequently, the data processing block 57 gets a program signal as a result of the analog processing and transmits the program signal to a loudspeaker 58 to sound the program signal for the user to hear. Thus, the CPU 50 can let the user hear desired radio programs broadcast by radio stations.

When a radio station is selected and the recording of a radio program thereof is requested through the operation key 55, the CPU 50 controls the tuner 59 so as to extract the radio wave of the radio station selected by the user in substantially the same manner as above. At the same time the CPU 50 controls the data processing block 57 to record the radio program. Consequently, the tuner 59 extracts the radio wave of the radio station selected by the user from among the radio waves of radio stations received from the antenna 60, executes reception processing on the extracted radio wave, and transmits a resultant program signal to the data processing block 57. The data processing block 57 executes digital processing on the program signal supplied by the tuner 59 and transmits the resultant program data to the CPU 50. Then, the CPU 50 transmits the program data to the HDD 53 for storage therein as a data file. Thus, the CPU 50 can record radio programs broadcast from desired radio stations.

Further, when the reproduction of program data is requested by the user through the operation key 55, the CPU 50 reads the requested program data from the HDD 53 and transmits this program data to the data processing block 57. The data processing block 57 executes predetermined digital processing on the program data supplied by the CPU 50 and then predetermined analog processing, such as digital-to-analog conversion processing and amplification processing, on the digitally processing program data. Then, the data processing block 57 transmits a resultant program signal to the loudspeaker 58 to sound the radio program based on the resultant program signal for the user to hear. Thus, the CPU 50 can let the user hear radio programs stored in the HDD 53.

It should be noted that, in the data recording apparatus 100, the CPU 50 executes various processing operations as instructed by computer programs stored in the ROM 52 or the HDD 53, thereby controlling hardware functional blocks as described above. Hence, with the data recording apparatus 100, it is practicable to function the CPU 50 and the data processing block 57 in substantially the same manner as the data processing block 14 (FIG. 2) described above by appropriately selecting computer programs stored in the ROM 52 or the HDD 53 in accordance with the functions of the data recording apparatus 10 of the hardware configuration of the functional circuit blocks shown in FIG. 2.

In the data recording apparatus 100, the operation key 55 can be made function in substantially the same manner as the operation block 12 (FIG. 2) and the CPU 50 and the HDD 53 can be made function in substantially the same manner as the recording block 16 (FIG. 2). Further, in the data recording apparatus 100, the CPU 50, tuner 59, and the antenna 60 can be made function in substantially the same manner as the radio receiver block 11 (FIG. 2) and the CPU 50 and the display block 61 can be made function in substantially the same manner as the display block 17 (FIG. 2). Still further, in the data recording apparatus 100, the CPU 50 can be made function in substantially the same manner as the sectional identification block 18 (FIG. 2), the data format conversion block 19 (FIG. 2), the control block 20 (FIG. 2), and the division block 21 (FIG. 2). The loudspeaker 58 corresponds to the output block 15 (FIG. 2).

Consequently, the data recording apparatus 100 can execute the above-mentioned processing operations provided by the data recording apparatus 10 by appropriately selecting various computer programs stored in the ROM 52 or the HDD 53 in accordance with the functions provided by the data recording apparatus 10, thereby providing substantially the same effects as those of the first embodiment of the present invention described above.

(2-2) Variations to the second embodiment

In the above-described second embodiment, the data recording apparatus according to the present invention is applied to the data recording apparatus 100 shown in FIG. 8. However, the present invention is not limited to this, and it may also practicable to widely apply the data recording apparatus according to the present invention to various other data recording apparatuses, such as HDD (Hard Disk Drive) video recording blocks, optical disk recording blocks, semiconductor memory recording blocks, mobile phones having radio recording functions, portable audio players having radio recording functions, and personal computers, for example.

In the above-described second embodiment, the CPU 50 shown in FIG. 8 is applied to the section identifying block for identifying the music part section equivalent to the music part and another part section equivalent to another part in the data mixingly formed by the music part and another part different from the music part. However, the present invention is not limited to this, and it may also practicable to widely apply various other section identifying blocks, such as section identifying circuits having hardware configurations for identifying the music part section equivalent to the music part and another part section equivalent to another part in the data mixingly formed by the music part and another part different from the music part.

In the above-described second embodiment, the CPU 50 shown in FIG. 8 is applied as the data format converting block for converting the data format of mixed data. However, the present invention is not limited to this, and it may also practicable to widely apply various other data format converting blocks, such as data format converting circuits having hardware configurations for converting the data format of mixed data.

In the above-described second embodiment, the HDD 53 shown in FIG. 8 is applied as the recording block for recording mixed data with the data format thereof converted by the data format converting block. However, the present invention is not limited to this, and it may also practicable to widely apply the recording block for recording mixed data to various other recording media, such as optical disk recording blocks, cassette tape recording blocks, and semiconductor memory recording blocks.

In the above-described second embodiment, the CPU 50 shown in FIG. 8 is applied as the control block for controlling the data format conversion block so as to convert the data formats of the music part section and another part section identified in mixed data by the section identification block when converting the data format of the mixed data. However, the present invention is not limited to this, and it may also practicable to widely apply various other control blocks, such as control circuits having a hardware configuration for controlling the data format conversion block so as to convert the data formats of the music part section and another part section identified in mixed data by the section identification block when converting the data format of the mixed data.

In the above-described second embodiment, the CPU 50 shown in FIG. 8 is applied as the dividing block for dividing the mixed data with the data formats of the music part section and another part section converted into different data formats by the data format conversion block into the music part section data of the music part section and another part section data of another part section. However, the present invention is not limited to this, and it may also practicable to widely apply various other dividing blocks, such as dividing circuits having a hardware configuration for dividing the mixed data with the data formats of the music part section and another part section converted into different data formats by the data format conversion block into the music part section data of the music part section and another part section data of another part section.

In the above-described first and second embodiments, the program data broadcast from a radio station shown in FIGS. 1 through 8 is applied as the mixed data formed by a music part and another part different from the music part. However, the present invention is not limited to this, and it may also practicable to apply various other mixed data, such as video data of a television program broadcast by a television station, audio content data downloaded from the Internet, and video content data. In addition, program data and the like may be read from other recording media and the above-described processing operations may be executed on these program data and the like. Namely, the type of mixed data and the method of getting mixed data are not limited to those described above.

The present invention is applicable to data recording apparatuses configured to record the program data of radio programs broadcast by radio stations.

While preferred embodiments of the present invention have been described using specific terms, such description is for illustrative purpose, and it is to be understood that changes and variations may be made without departing from the spirit or scope of the following claims.

## Claims

1. A data recording apparatus comprising:

   a section identification block configured to, in mixed data mixingly formed by a music part and another part different from said music part, identify a music part section equivalent to said music part and another part section equivalent to said another part;
   a data format conversion block configured to convert a data format of said mixed data;
   a recording block configured to record said mixed data with said data format of said mixed data converted by said data format conversion block; and
   a control block configured to, when said data format of said mixed data is converted, control said data format conversion block to convert data formats of said music part section and said another part section into different data formats from each other.

2. The data recording apparatus according to claim 1, wherein said control block controls said data format conversion block to convert said data formats of said music part section and said another part section into data formats having different bit rates.

3. The data recording apparatus according to claim 1, wherein said control block controls said data format conversion block to convert said data formats of said music part section and said another part section into data formats having different sampling rates.

4. The data recording apparatus according to claim 1, wherein said control block controls said data format conversion block to convert said data formats of said music part section and said another part section into data formats having different data compression ratios.

5. The data recording apparatus according to claim 2, wherein said recording block records said mixed data by dividing into music part section data with said data format of said music part section converted and another part section data with said data format of said another part section converted.

6. The data recording apparatus according to claim 1, wherein said control block controls said data format conversion block to convert said data formats of said music part section and said another part section into data formats having different acoustic schemes.

7. The data recording apparatus according to claim 1, wherein,
   said section identification block identifies a conversation part section equivalent to a conversation part and a remaining part section equivalent to a remaining part, in said another part section of said mixed data and
   when said data format of said mixed data is converted, said control block controls said data format conversion block to convert said data formats of said music part section, said conversation part section, and said remaining part section into different data formats from one another.

8. The data recording apparatus according to claim 7, wherein said control block controls said data format conversion block to convert said data formats of said music part section, said conversation part section, and said remaining part section into data formats having different bit rates and different acoustic schemes.

9. A data recording method comprising the steps of:

   identifying a music part section equivalent to said music part and another part section equivalent to said another part, in mixed data mixingly formed by a music part and another part different from said music part;
   converting a data format of said music part section and said another part section identified in said mixed data;
   recording said mixed data with said data format of said mixed data converted; and
   controlling, when said data format of said mixed data is converted, said data format conversion block to convert data formats of said music part section and said another part section into different data formats from each other.

**10.** A computer-readable recording media recording a data recording program for making a computer execute the steps of:

identifying a music part section equivalent to said music part and another part section equivalent to said another part, in mixed data mixingly formed by a music part and another part different from said music part;
converting a data format of said music part section and said another part section identified in said mixed data;
recording said mixed data with said data format of said mixed data converted; and
controlling, when said data format of said mixed data is converted, said data format conversion block to convert data formats of said music part section and said another part section into different data formats from each other.

**11.** A data recording apparatus comprising:

section identification means configured to, in mixed data mixingly formed by a music part and another part different from said music part, identify a music part section equivalent to said music part and another part section equivalent to said another part;
data format conversion means configured to convert a data format of said mixed data;
recording means configured to record said mixed data with said data format of said mixed data converted by said data format conversion means; and
control means configured to, when said data format of said mixed data is converted, control said data format conversion means to convert data formats of said music part section and said another part section into different data formats from each other.

FIG.1

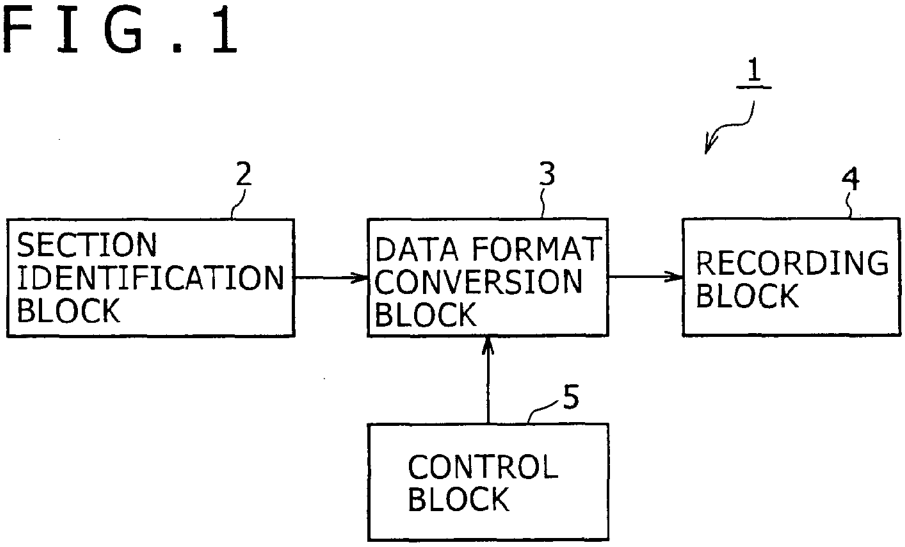
1
2
SECTION IDENTIFICATION BLOCK
3
DATA FORMAT CONVERSION BLOCK
4
RECORDING BLOCK
5
CONTROL BLOCK

FIG.2

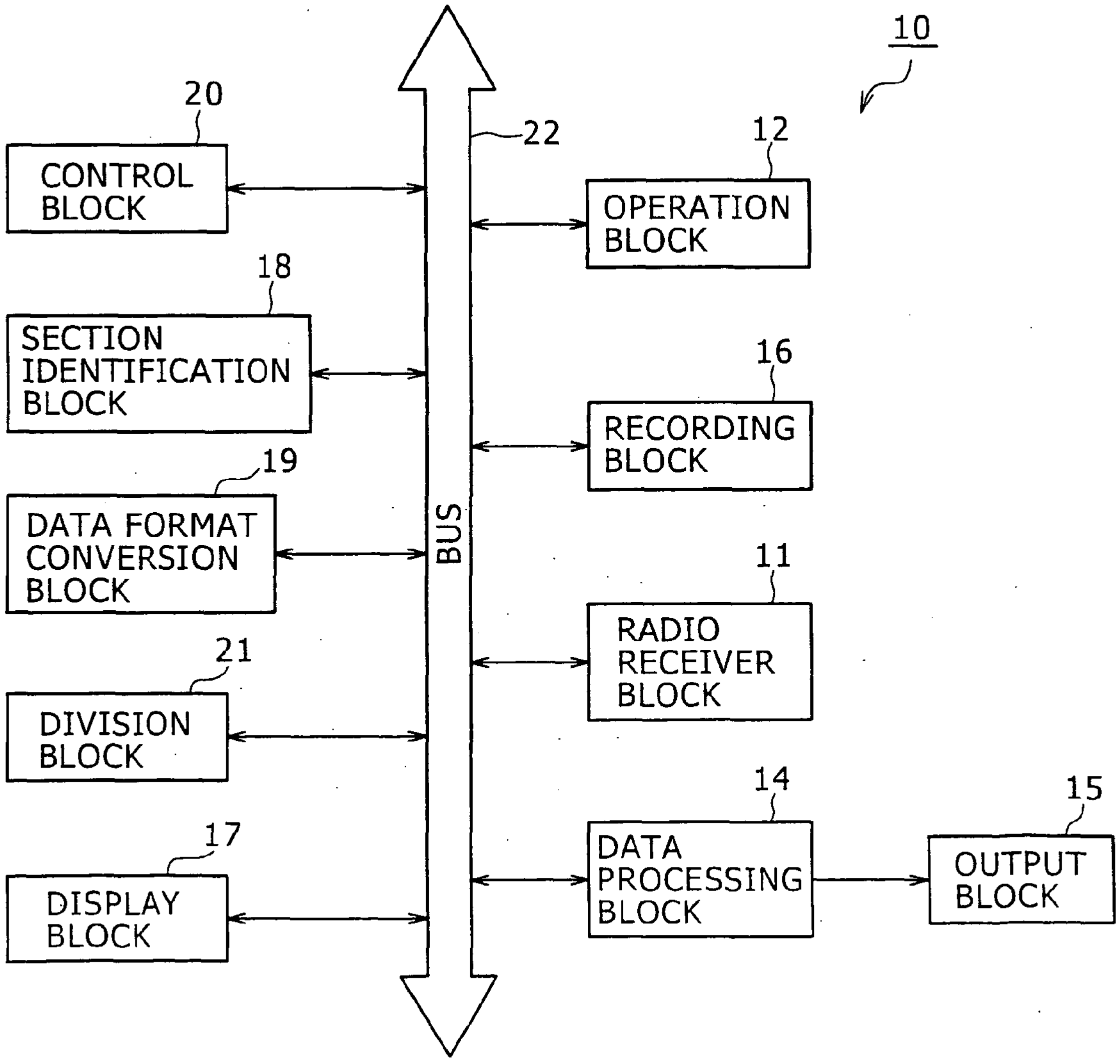
10
20
CONTROL BLOCK
18
SECTION IDENTIFICATION BLOCK
19
DATA FORMAT CONVERSION BLOCK
21
DIVISION BLOCK
17
DISPLAY BLOCK
22
BUS
12
OPERATION BLOCK
16
RECORDING BLOCK
11
RADIO RECEIVER BLOCK
14
DATA PROCESSING BLOCK
15
OUTPUT BLOCK

FIG. 3

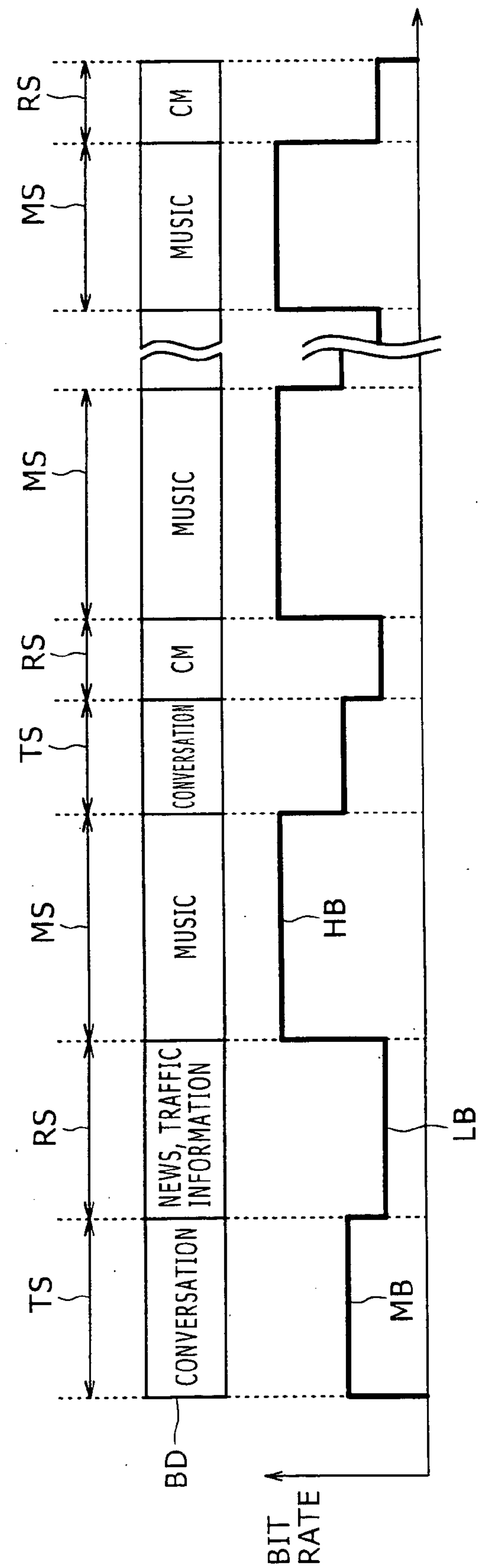
TS
RS
MS
TS
RS
MS
MS
RS
CONVERSATION
NEWS, TRAFFIC INFORMATION
MUSIC
CONVERSATION
CM
MUSIC
MUSIC
CM
MB
LB
HB
BD
BIT RATE

FIG. 4

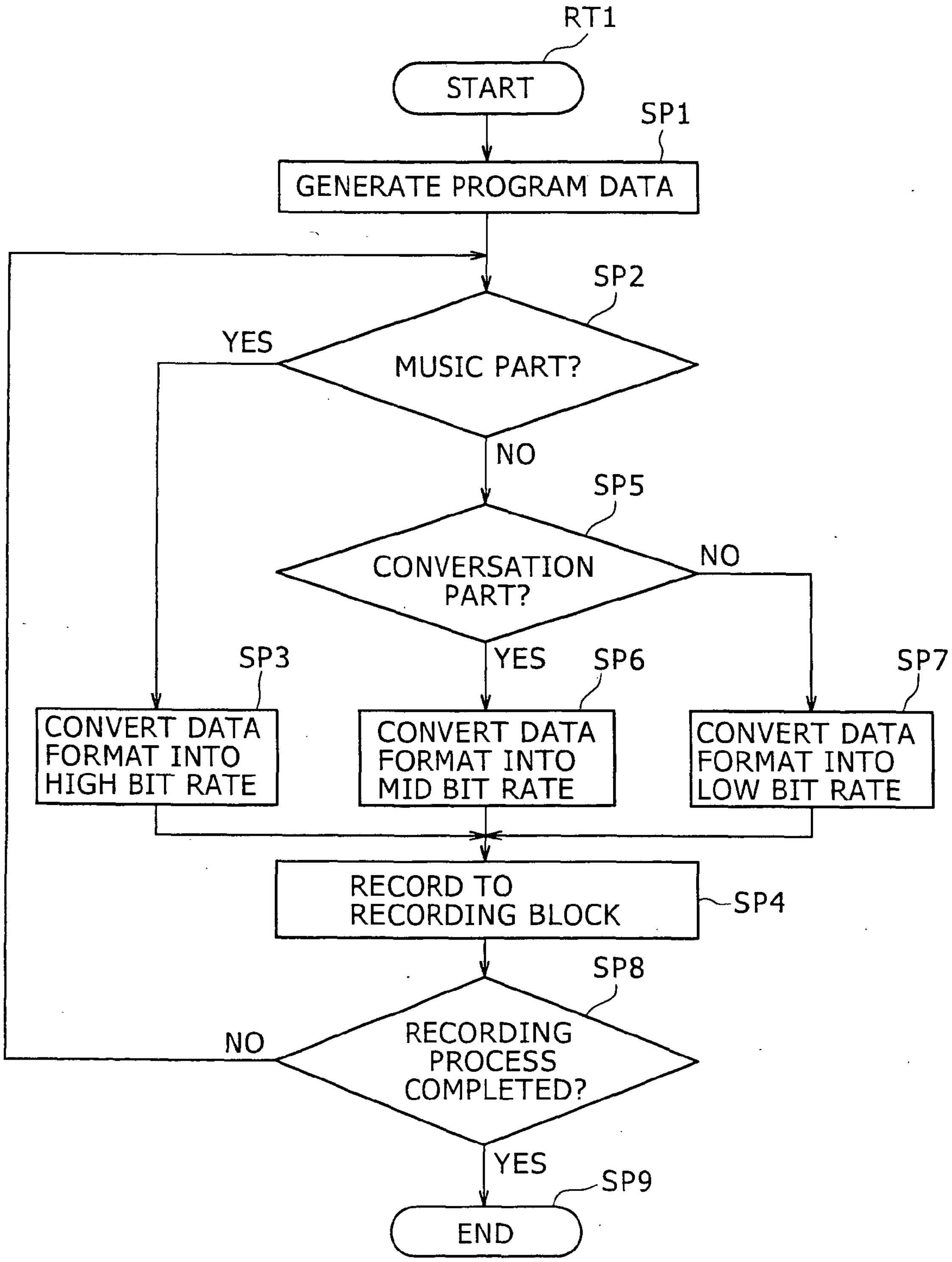
RT1
START
SP1
GENERATE PROGRAM DATA
SP2
MUSIC PART?
YES
NO
SP5
CONVERSATION PART?
NO
YES
SP3
CONVERT DATA FORMAT INTO HIGH BIT RATE
SP6
CONVERT DATA FORMAT INTO MID BIT RATE
SP7
CONVERT DATA FORMAT INTO LOW BIT RATE
RECORD TO RECORDING BLOCK
SP4
SP8
RECORDING PROCESS COMPLETED?
NO
YES
SP9
END

FIG. 5

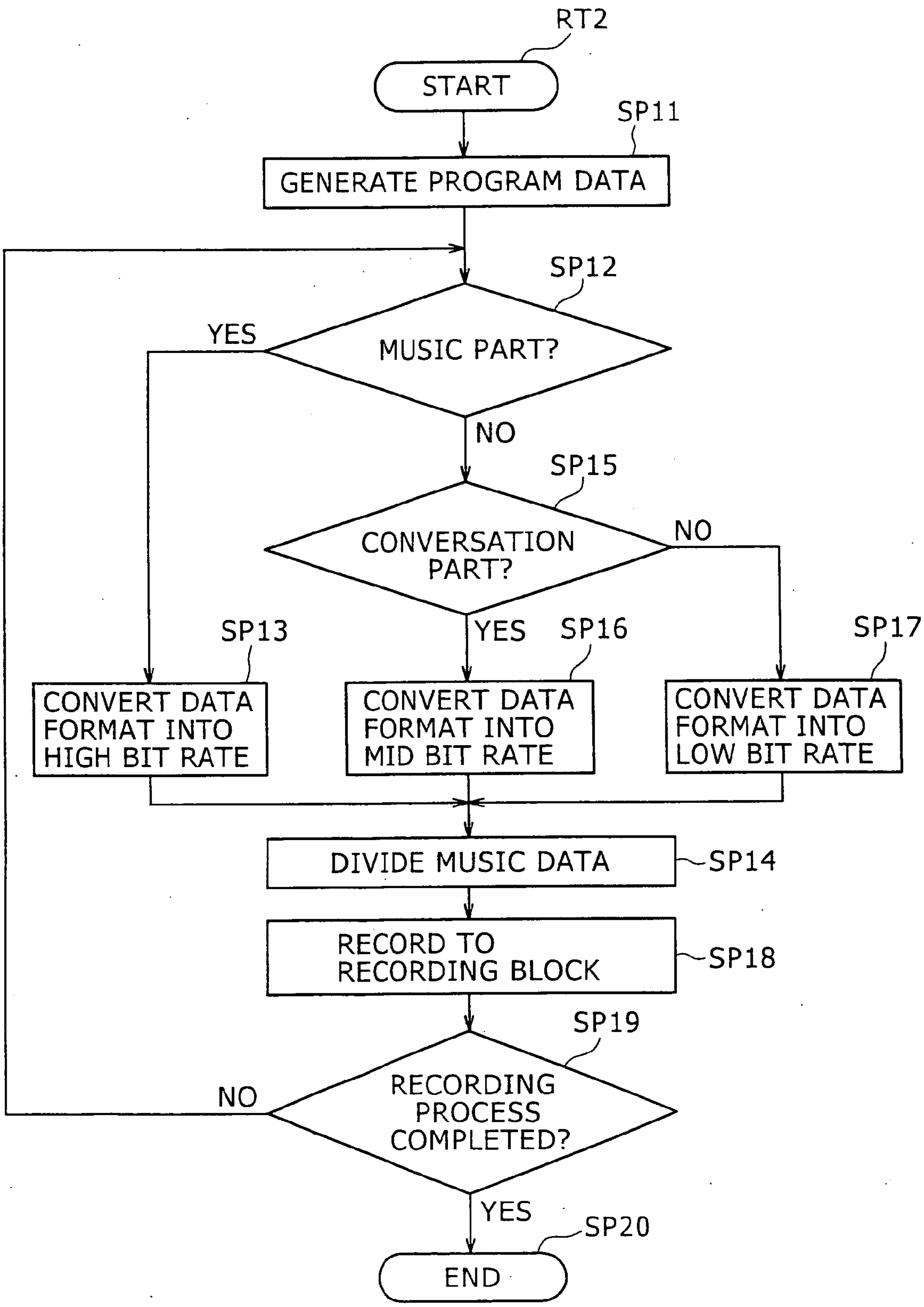
RT2
START
SP11
GENERATE PROGRAM DATA
SP12
YES
MUSIC PART?
NO
SP15
CONVERSATION PART?
NO
YES
SP13
SP16
SP17
CONVERT DATA FORMAT INTO HIGH BIT RATE
CONVERT DATA FORMAT INTO MID BIT RATE
CONVERT DATA FORMAT INTO LOW BIT RATE
DIVIDE MUSIC DATA
SP14
RECORD TO RECORDING BLOCK
SP18
SP19
NO
RECORDING PROCESS COMPLETED?
YES
SP20
END

FIG. 6

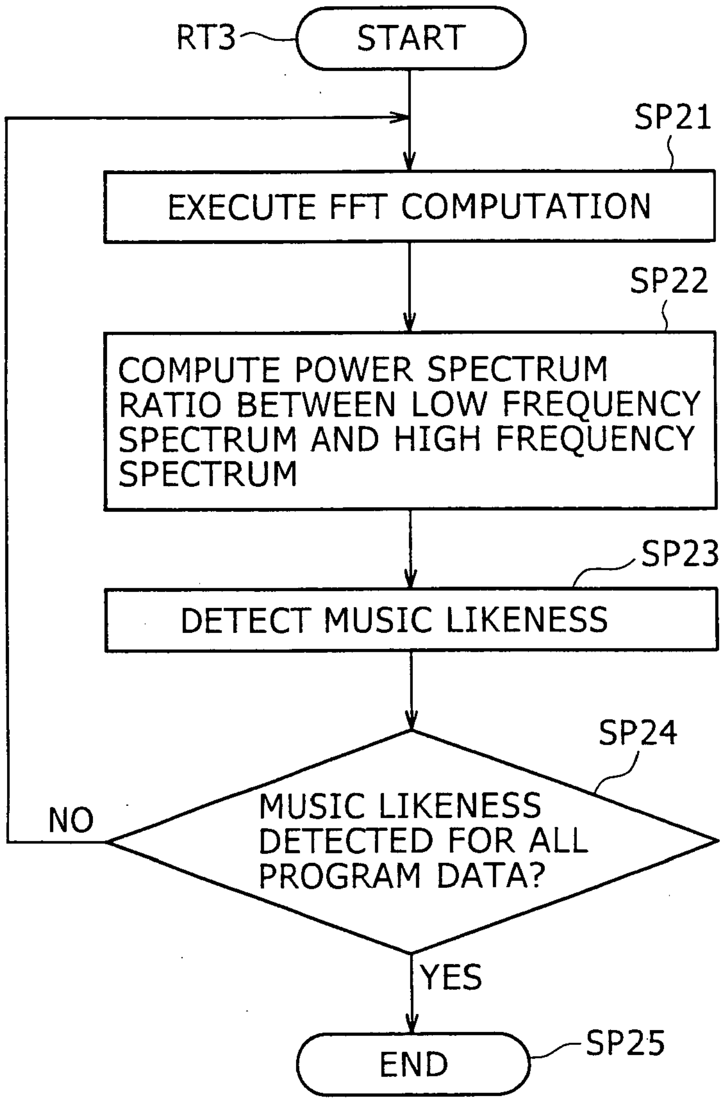
RT3
START
SP21
EXECUTE FFT COMPUTATION
SP22
COMPUTE POWER SPECTRUM RATIO BETWEEN LOW FREQUENCY SPECTRUM AND HIGH FREQUENCY SPECTRUM
SP23
DETECT MUSIC LIKENESS
SP24
MUSIC LIKENESS DETECTED FOR ALL PROGRAM DATA?
NO
YES
END
SP25

FIG. 7

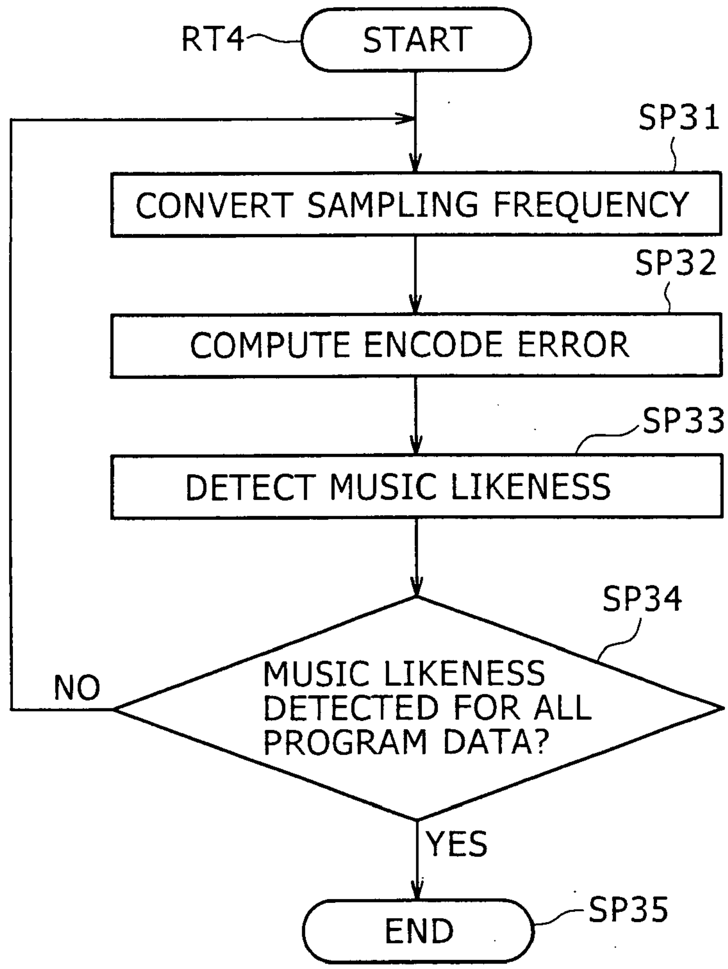
RT4
START
SP31
CONVERT SAMPLING FREQUENCY
SP32
COMPUTE ENCODE ERROR
SP33
DETECT MUSIC LIKENESS
SP34
MUSIC LIKENESS DETECTED FOR ALL PROGRAM DATA?
NO
YES
END
SP35

FIG. 8

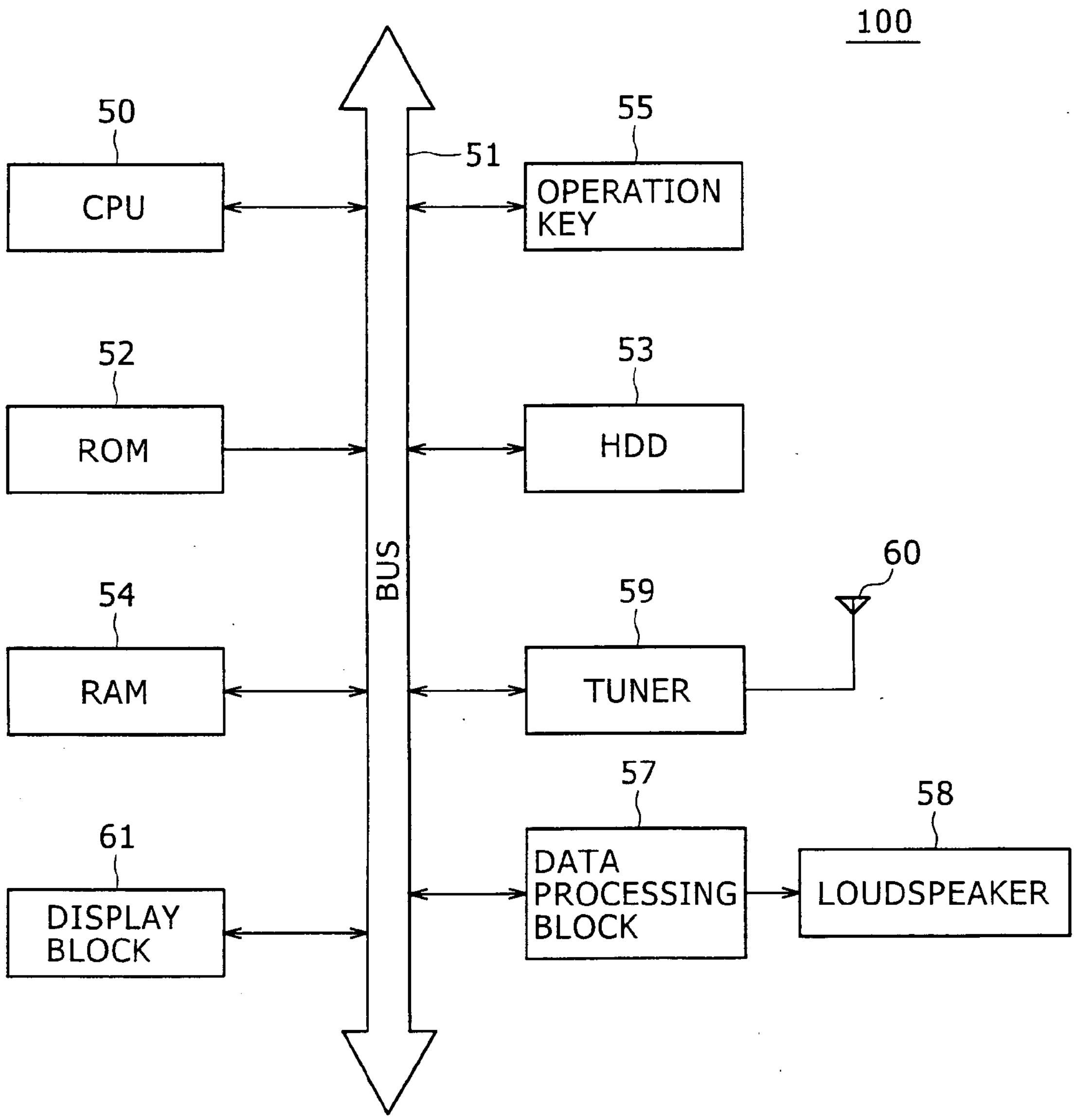
100
50
CPU
51
55
OPERATION KEY
52
ROM
53
HDD
BUS
60
54
RAM
59
TUNER
57
58
61
DISPLAY BLOCK
DATA PROCESSING BLOCK
LOUDSPEAKER

European Patent Office

# EUROPEAN SEARCH REPORT

Application Number
EP 07 01 3917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/029843 A (UNITED VIDEO PROPERTIES INC [US]; DIGIOVANNI JOSEPH [US]; THOMAS WILLI) 31 March 2005 (2005-03-31)<br>* the whole document *<br>----- | 1-11 | INV.<br>G11B20/00<br>G11B20/10<br>G11B27/031<br>G11B27/28<br>G10L19/00<br>G10L19/14<br>H04N5/00<br>G10L11/00 |
| X | JP 10 222933 A (SONY CORP)<br>21 August 1998 (1998-08-21)<br>* abstract *<br>----- | 1-3,5,6,<br>9-11 | |
| X | US 2004/002310 A1 (HERLEY CORMAC [US] ET AL) 1 January 2004 (2004-01-01)<br>* paragraph [0038] - paragraph [0065] *<br>* paragraph [0101] - paragraph [0102] *<br>----- | 1,2,4,<br>6-11 | |
| X<br><br>A | US 2003/163823 A1 (LOGAN JAMES D [US] ET AL) 28 August 2003 (2003-08-28)<br>* the whole document *<br>----- | 1,2,4-6,<br>9-11<br>7,8 | |
| A | US 6 600 908 B1 (CHAN HARK C [US])<br>29 July 2003 (2003-07-29)<br>* the whole document *<br>----- | 1,4,7,<br>9-11 | TECHNICAL FIELDS SEARCHED (IPC) |
| P,A | EP 1 717 976 A (LG ELECTRONICS INC [KR])<br>2 November 2006 (2006-11-02)<br>* the whole document *<br>----- | 1,9-11 | G11B<br>G10L<br>H04N<br>H04H |
| A | US 2006/015333 A1 (GAO YANG [US])<br>19 January 2006 (2006-01-19)<br>* the whole document *<br>----- | | |

The present search report has been drawn up for all claims

1

| Place of search | Date of completion of the search | Examiner |
|---|---|---|
| Munich | 2 October 2007 | Gil Zamorano, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 01 3917

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2007

| Patent document cited in search report | Publication date | Patent family member(s) | Publication date |
|---|---|---|---|
| WO 2005029843 A | 31-03-2005 | CA 2538885 A1<br>CN 1853407 A<br>EP 1665773 A1<br>JP 2007506306 T | 31-03-2005<br>25-10-2006<br>07-06-2006<br>15-03-2007 |
| JP 10222933 A | 21-08-1998 | NONE | |
| US 2004002310 A1 | 01-01-2004 | US 2005262528 A1 | 24-11-2005 |
| US 2003163823 A1 | 28-08-2003 | NONE | |
| US 6600908 B1 | 29-07-2003 | US 6904270 B1 | 07-06-2005 |
| EP 1717976 A | 02-11-2006 | CN 1856073 A<br>KR 20060112780 A<br>US 2006263043 A1 | 01-11-2006<br>02-11-2006<br>23-11-2006 |
| US 2006015333 A1 | 19-01-2006 | WO 2006019556 A2 | 23-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006200041 A
- JP 10051337 A